# EUROPEAN PATENT APPLICATION

(11) **EP 4 082 784 A1**
(43) Date of publication of application: **02.11.2022**
(21) Application number: 20908434.2
(22) Date of filing: 18.12.2020
(51) Int. Cl.: B32B 27/18, B32B 27/30, C08F 20/10, C09D 4/02, C09K 9/02, G02C 7/10, C08F 220/20, G02B 5/23, C09D 7/48, B32B 7/023

(54) **POLYMERIZABLE COMPOSITION FOR FORMING PROTECTIVE LAYER ON PHOTOCHROMIC ARTICLE, PHOTOCHROMIC ARTICLE AND EYEGLASSES**

(30) Priority: 27.12.2019 JP 2019239791; 31.03.2020 JP 2020064597
(71) Applicant: Hoya Lens Thailand Ltd., Pathumthani 12130 (TH)
(72) Inventor: SHIMADA, Takuya, Tokyo 160-8347 (JP); KOBAYASHI, Kei, Tokyo 160-8347 (JP); YAMASHITA, Teruo, Tokyo 160-8347 (JP); WATANABE, Tsuyoshi, Tokyo 160-8347 (JP)
(74) Representative: Hoffmann Eitle
(86) International application number: PCT/JP2020/047320
(87) International publication number: WO 2021/132049

(57) **Abstract**

There is provided a polymerizable composition for forming a protective layer of a photochromic article including one or more types of (meth)acrylates and 70.0 mass% or more of an alicyclic bifunctional (meth)acrylate based on a total amount of the (meth)acrylates.

## Description

### [Technical Field]

The present invention relates to a polymerizable composition for forming a protective layer of a photochromic article, a photochromic article and eyeglasses.

### [Background Art]

A photochromic compound is a compound having a property of developing a color under emission of light in a wavelength range having photoresponsivity and fading without light emission (photochromic properties). Hereinafter, an article containing a photochromic compound will be referred to as a photochromic article. For example, PTL 1 discloses a photochromic article in which a layer containing a photochromic compound (photochromic layer) is provided on a substrate.

### [Citation List]

### [Patent Literature]

[PTL 1] WO 2003/011967

### [Summary of Invention]

### [Technical Problem]

The inventors have studied provision of a protective layer on a photochromic article in order to improve the performance of the photochromic article. The inventors considered the following performance to be desirable for such a protective layer.

First, it should have high hardness. This is because, when a protective layer having high hardness is provided, it is possible to improve the durability of the photochromic article.

Second, it should have excellent solvent resistance. In a process of producing a photochromic article, generally, after a layer is formed, a wiping treatment with a solvent is performed in order to clean the surface of the formed layer. The above is because, if the protective layer is damaged in the wiping treatment, this causes the occurrence of fogging and optical defects in the photochromic article.

In view of the above circumstances, an object of one aspect of the present invention is to provide a photochromic article including a protective layer having both high hardness and excellent solvent resistance.

### [Solution to Problem]

One aspect of the present invention relates to a polymerizable composition for forming a protective layer of a photochromic article including one or more types of (meth)acrylates and 70.0 mass% or more of an alicyclic bifunctional (meth)acrylate based on a total amount of the (meth)acrylates (hereinafter simply referred to as a "polymerizable composition for forming a protective layer" or a "composition").

The composition contains 70.0 mass% or more of an alicyclic bifunctional (meth)acrylate based on a total amount of the (meth)acrylates. Thereby, as a cured layer obtained by curing such a composition, a protective layer having high hardness and excellent solvent resistance can be provided on a photochromic article.

### [Advantageous Effects of Invention]

According to one aspect of the present invention, it is possible to provide a polymerizable composition for forming a protective layer of a photochromic article which allows a protective layer having high hardness and excellent solvent resistance to be formed on a photochromic article. In addition, according to one aspect of the present invention, it is possible to provide a photochromic article having a protective layer formed from the composition.

### [Description of Embodiments]

[Polymerizable composition for forming protective layer of photochromic article]

Hereinafter, the composition will be described in more detail.

The composition is a polymerizable composition for forming a protective layer of a photochromic article. In the present invention and this specification, the "photochromic article" is an article containing a photochromic compound. In the photochromic article, the photochromic compound is, for example, incorporated into a layer (photochromic layer) provided on the substrate. The photochromic layer will be described below in detail. The protective layer formed from the composition can be provided, for example, on the photochromic layer, and thus can contribute to improving the durability of the photochromic article.

### < (Meth)acrylates>

The composition is a polymerizable composition, and contains one or more types of polymerizable compounds. In the present invention and this specification, the "polymerizable compound" is a compound having one or more polymerizable groups in one molecule. The composition contains, as a polymerizable compound, one or more types of (meth)acrylates, and contains 70.0 mass% or more of an alicyclic bifunctional (meth)acrylate based on a total amount of 100 mass% of the (meth)acrylates.

In the present invention and this specification, "(meth)acrylate" refers to both an acrylate and a methacrylate. An "acrylate" is a compound having one or more acryloyl groups in one molecule. A "methacrylate" is a compound having one or more methacryloyl groups in one molecule. The number of functional groups of the (meth)acrylate is the number of groups selected from the group consisting of acryloyl groups and methacryloyl groups contained in one molecule. In the present invention and this specification, a "methacrylate" contains only a methacryloyl group as a (meth)acryloyl group, and something that contains an acryloyl group and a methacryloyl group as (meth)acryloyl groups is an acrylate. The acryloyl group may be contained in the form of an acryloyloxy group, and the methacryloyl group may be contained in the form of a methacryloyloxy group. The "(meth)acryloyl group" described below refers to both an acryloyl group and a methacryloyl group, and "(meth)acryloyloxy group" refers to both an acryloyloxy group and a methacryloyloxy group. In addition, unless otherwise specified, the groups described may have substituents or may be unsubstituted. If a group has a substituent, examples of substituents include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, and a bromine atom), a cyano group, an amino group, a nitro group, an acyl group, and a carboxyl group. For a group having a substituent, the "number of carbon atoms" is the number of carbon atoms of a part containing no substituents.

### (Alicyclic bifunctional (meth)acrylate)

The alicyclic bifunctional (meth)acrylate is a compound having an alicyclic structure and two (meth)acryloyl groups contained in one molecule. The composition contains 70.0 mass% or more of an alicyclic bifunctional (meth)acrylate based on a total amount of the (meth)acrylates. The inventors consider this to be the reason why the protective layer formed from the composition can exhibit high hardness and excellent solvent resistance. In order to make a protective layer that can exhibit a higher hardness and better solvent resistance provided on the photochromic article, in the composition, the content of the alicyclic bifunctional (meth)acrylate is preferably 75.0 mass% or more, more preferably 80.0 mass% or more, still more preferably 85.0 mass% or more, still more preferably 90.0 mass% or more, and yet more preferably 95.0 mass% or more based on a total amount of the (meth)acrylates. In one aspect, in the composition, a total amount of the (meth)acrylates may be an amount of the alicyclic bifunctional (meth)acrylate. The composition may contain only one type of alicyclic bifunctional (meth)acrylate in one aspect, and two or more types thereof in another aspect. When the composition contains two or more types of alicyclic bifunctional (meth)acrylates, the content of the alicyclic bifunctional (meth)acrylate is a total content of two or more types thereof. This similarly applies to the contents of other components.

The alicyclic bifunctional (meth)acrylate may be, for example, a compound having a structure represented by R¹-(L¹)n1-Q-(L²)n2-R². Here, Q represents a divalent alicyclic group, R¹ and R² each independently represent a (meth)acryloyl group or a (meth)acryloyloxy group, L¹ and L² each independently represent a linking group, and n1 and n2 each independently represent 0 or 1. The divalent alicyclic group represented by Q is preferably an alicyclic hydrocarbon group having 3 to 20 carbon atoms, and examples thereof include a cyclopentylene group, a cyclohexylene group, a cycloheptylene group, a cyclooctylene group, a tricyclodecane group, an adamantylene group, and an isobornyl group. Examples of linking groups represented by L¹ and L² include an alkylene group. The alkylene group may be, for example, an alkylene group having 1 to 6 carbon atoms.

Specific examples of alicyclic bifunctional (meth)acrylates include cyclohexane dimethanol di(meth)acrylate, ethoxylated cyclohexane dimethanol di(meth)acrylate, propoxylated cyclohexane dimethanol di(meth)acrylate, ethoxylated propoxylated cyclohexane dimethanol di(meth)acrylate, tricyclodecane dimethanol di(meth)acrylate, ethoxylated tricyclodecane dimethanol di(meth)acrylate, propoxylated tricyclodecane dimethanol di(meth)acrylate, and ethoxylated propoxylated tricyclodecane dimethanol di(meth)acrylate. The molecular weight of the alicyclic bifunctional (meth)acrylate may be, for example, in a range of 200 to 400, but is not limited to this range. In the present invention and this specification, for the molecular weight of the polymer, a theoretical molecular weight calculated from the structural formula determined by structural analysis of the compound or the raw material preparation ratio during production is used. The alicyclic bifunctional (meth)acrylate may contain, as a (meth)acryloyl group, only an acryloyl group, only a methacryloyl group, or an acryloyl group and a methacryloyl group.

### (Other (meth)acrylates)

In one aspect, the composition may contain, as a (meth)acrylate, one or more types of other (meth)acrylates in addition to the alicyclic bifunctional (meth)acrylate and in another aspect, the composition may contain, as a (meth)acrylate, only an alicyclic bifunctional (meth)acrylate. In the case of the former form, other (meth)acrylates contained together with the alicyclic bifunctional (meth)acrylate are not particularly limited, and one or two or more types of various (meth)acrylates can be used. Examples of other (meth)acrylates include monofunctional, bifunctional, trifunctional, tetrafunctional and pentafunctional (meth)acrylates, which may be acyclic or cyclic. "Acyclic" means that the component does not include a cyclic structure. On the other hand, "cyclic" means that the component includes a cyclic structure. The (meth)acrylate including a cyclic structure may have an alicyclic structure as a cyclic structure or may have another cyclic structure. For the alicyclic structure, the above description regarding the alicyclic bifunctional (meth)acrylate can be referred to. In the composition, the content of other (meth)acrylates may be 30.0 mass% or less, 25.0 mass% or less, 20.0 mass% or less, or 15.0 mass% or less based on a total amount of the (meth)acrylates. In addition, in the composition, the content of other (meth)acrylates may be 0 mass%, 0 mass% or more, more than 0 mass%, 1.0 mass% or more, 5.0 mass% or more or 10.0 mass% or more based on a total amount of the (meth)acrylates.

### <Other components>

The composition contains, as a polymerizable compound, at least one or more types of (meth)acrylates, and may contain one or more types of other polymerizable compounds other than the (meth)acrylate in one aspect, and may contain, as a polymerizable compound, only a (meth)acrylate in another aspect. Other polymerizable compounds are not particularly limited, and one or more types of known polymerizable compounds can be used. In the composition, the content of the (meth)acrylate is 80.0 mass% or more, 85.0 mass% or more, 90.0 mass% or more, or 95.0 mass% or more based on a total amount of 100 mass% of the polymerizable compounds, and a total amount of the polymerizable compounds may be an amount of the (meth)acrylate.

In one aspect, based on a total amount of 100 mass% of the composition, the content of the (meth)acrylate (a total content when the composition contains two or more types of (meth)acrylates) in the composition is preferably 80.0 mass% or more, more preferably 85.0 mass% or more, still more preferably 90.0 mass% or more, and yet more preferably 95.0 mass% or more. In the present invention and this specification, regarding the content, the "total amount of the composition" is a total amount of all components excluding a solvent in the composition containing the solvent. The composition may or may not contain a solvent. When the composition contains a solvent, any solvent in an arbitrary amount can be used as a usable solvent as long as it does not inhibit progress of the polymerization reaction of the polymerizable composition.

The composition may contain one or more types of various additives that can be added to the polymerizable composition in an arbitrary content. Examples of such additives include various known additives such as a polymerization initiator that allows a polymerization reaction to proceed, and a leveling agent for improving coating suitability of the composition.

For example, regarding the polymerization initiator, a known polymerization initiator that can function as a polymerization initiator for a (meth)acrylate can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to proceed in a short time, a photopolymerization initiator is preferable. Examples of photoradical polymerization initiators include benzoin acetals such as 2,2-dimethoxy-1,2-diphenylethane-1-one; α-hydroxyketones such as 1-hydroxycyclohexylphenyl ketone, 2-hydroxy-2-methyl-1-phenylpropan-1-one, and 1-[4-(2-hydroxyethoxy)phenyl]-2-hydroxy-2-methyl-1-propane-1-one; α-aminoketones such as 2-benzyl-2-dimethylamino-1-(4-morpholinophenyl)-butane-1-one, and 1,2-methyl-1-[4-(methylthio)phenyl]-2-morpholinopropan-1-one; oxime esters such as 1-[(4-phenylthio)phenyl]-1,2-octadione-2-(benzoyl)oxime; phosphine oxides such as bis(2,4,6-trimethylbenzoyl)phenylphosphine oxide, bis(2,6-dimethoxybenzoyl)-2,4,4-trimethylpentyl phosphine oxide, and 2,4,6-trimethylbenzoyldiphenylphosphine oxide; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, and 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, and 4-methoxy-4'-dimethylaminobenzophenone; quinone compounds such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methyl benzoin, and ethyl benzoin; benzyl compounds such as benzyl dimethyl ketal; acridine compounds such as 9-phenylacridine, 1,7-bis(9,9'-acridinyl heptane); and N-phenylglycine, and coumarin. In addition, in the 2,4,5-triarylimidazole dimer, substituents on the aryl groups of two triarylimidazole moieties may provide the same symmetric compound, or may provide different asymmetric compounds. In addition, a thioxanthone compound and a tertiary amine may be combined such as a combination of diethylthioxanthone and didimethylaminobenzoic acid. Among these, in consideration of curability, transparency and heat resistance, α-hydroxyketone and phosphine oxide are preferable. The content of the polymerization initiator may be, for example, in a range of 0.1 to 5.0 mass% based on a total amount of 100 mass% of the composition.

In addition, in one aspect, the composition may contain a UV absorbing agent. Regarding the UV absorbing agent, one or more types of various UV absorbing agents, for example, UV absorbing agents based on hydroxyphenyltriazine compounds such as 2,4-bis(2,4-dimethylphenyl)-6-(2-hydroxy-4-n-octyloxyphenyl)-s-triazine, 2,4,6-tris(2-hydroxy-4-hexyloxy-3-methylphenyl)-s-triazine, 2-[2-hydroxy-4-(2-ethylhexyloxy)phenyl]-4,6-dibiphenyl-s-triazine, and 2-[[2-hydroxy-4-[1-(2-ethylhexyloxycarbonyl)ethyloxy]phenyl]]-4,6-diphenyl-s-triazine, and based on benzotriazoles such as 2-(5-chloro-2H-benzotriazole-2-yl)-6-tert-butyl-4-methylphenol, and 2-(5-chloro-2-benzotriazolyl)-6-tert-butyl-p-cresol may be used. When the composition contains a UV absorbing agent, it can contribute to improving weather resistance of the photochromic article having a protective layer formed from the composition. When the composition contains a UV absorbing agent, the content of the UV absorbing agent may be, for example, in a range of 0.1 to 1.0 mass%, based on a total amount of 100 mass% of the composition.

The composition can be prepared by simultaneously or sequentially mixing the various components described above in any order.

### [Photochromic article]

One aspect of the present invention relates to a photochromic article including a photochromic layer containing a photochromic compound and a protective layer, which is a cured layer obtained by curing the composition.

Hereinafter, the photochromic article will be described in more detail.

### <Photochromic layer>

### (Photochromic compound)

Regarding the photochromic compound, known compounds exhibiting photochromic properties can be used. The photochromic compound can exhibit photochromic properties with respect to, for example, ultraviolet rays. Examples of photochromic compounds include compounds having a known framework exhibiting photochromic properties such as fulgimide compounds, spirooxazine compounds, chromene compounds, and indeno-fused naphthopyran compounds. The photochromic compounds may be used alone or two or more thereof may be used in combination. The content of the photochromic compound of the composition may be, for example, about 0.1 to 15 mass%, based on a mass of 100 mass% of the photochromic layer, but is not limited to this range.

### (Component for forming photochromic layer)

The photochromic layer may be a cured layer obtained by curing a polymerizable composition containing one or more types of photochromic compounds. Known techniques for photochromic articles can be applied to various components such as polymerizable compounds contained in the polymerizable composition for forming a photochromic layer. In consideration of adhesion with respect to the protective layer, the photochromic layer is preferably a cured layer obtained by curing a polymerizable composition containing a (meth)acrylate as a polymerizable compound.

In one aspect, the photochromic layer may be obtained by directly applying a polymerizable composition containing one or more types of photochromic compounds to a surface of the substrate or may be a cured layer formed by curing a coating layer applied and formed on a surface of a layer provided on a substrate. As the coating method, known coating methods such as a spin coating method and a dip coating method can be used, and a spin coating method is preferable in consideration of coating uniformity. The polymerization treatment may be light emission and/or a heat treatment, and light emission is preferable in order for the polymerization reaction to proceed in a short time. Polymerization conditions may be determined according to the types and the formulations of various components contained in the polymerizable composition. The above description of the coating method and the polymerization treatment also apply to the polymerizable composition for forming a protective layer. The thickness of the photochromic layer is preferably, for example, in a range of 5 to 80 µm, and more preferably in a range of 20 to 60 µm.

### <Protective layer>

The photochromic article includes a protective layer which is a cured layer obtained by curing the polymerizable composition for forming a protective layer. The protective layer can be directly provided on the surface of the photochromic layer or can be provided on the surface of a layer positioned on the photochromic layer. Examples of layers that can be positioned between the photochromic layer and the protective layer include a primer layer. The thickness of the protective layer is preferably 10 µm or more, more preferably 15 µm or more, still more preferably 20 µm or more, and yet more preferably 25 µm or more. In addition, the thickness of the protective layer is preferably 45 µm or less, and more preferably 40 µm or less. The protective layer can contribute to improving the durability of the photochromic article. In addition, until an additional treatment (for example, formation of a cured layer to be described below) is performed, it is possible to protect the photochromic layer and prevent the photochromic layer from being scratched.

### <Substrate>

In one aspect, the photochromic article may be an optical article. Optical articles include various articles such as a spectacle lens, a goggles lens, a visor (cap) of a sun visor, and a shield member of a helmet. For example, the photochromic article may have a photochromic layer and a protective layer on a substrate selected according to the type of the optical article. As an example of the substrate, a spectacle lens substrate may be a plastic lens substrate or a glass lens substrate. The glass lens substrate may be, for example, a lens substrate made of inorganic glass. The lens substrate is preferably a plastic lens substrate because it is lightweight, hard to break, and easy to handle. Examples of plastic lens substrates include styrene resins such as (meth)acrylic resins, allyl carbonate resins such as polycarbonate resins, allyl resins, and diethylene glycol bis(allyl carbonate) resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and a cured product (generally referred to as a transparent resin) obtained by curing a curable composition containing a (thio)epoxy compound having one or more disulfide bonds in the molecule. As the lens substrate, an undyed lens (colorless lens) may be used or a dyed lens (colored lens) may be used. The refractive index of the lens substrate may be, for example, about 1.60 to 1.75. However, the refractive index of the lens substrate is not limited to the above range, and may be within the above range, or may be vertically separated from the above range. In the present invention and this specification, the refractive index is a refractive index for light having a wavelength of 500 nm. In addition, the lens substrate may be a lens having refractive power (so-called prescription lens) or a lens having no refractive power (so-called no-prescription lens).

The spectacle lens may include various lenses such as a single focus lens, a multifocal lens, and a progressive power lens. The type of the lens is determined by the surface shape of both sides of the lens substrate. In addition, the surface of the lens substrate may be a convex surface, a concave surface, or a flat surface. In a general lens substrate and spectacle lens, the object-side surface is a convex surface and the eyeball-side surface is a concave surface. However, the present invention is not limited thereto. The photochromic layer may be generally provided on the object-side surface of the lens substrate, or may be provided on the eyeball-side surface.

The photochromic layer may be directly provided on the surface of the substrate, or may be indirectly provided with one or more other layers therebetween. Examples of other layers include a primer layer for improving the adhesion between the photochromic layer and the substrate. Such a primer layer is known.

### <Layer that can be provided arbitrarily>

The photochromic article may have a layer configuration of "substrate/photochromic layer/protective layer." Regarding the layer configuration, "/" is used to indicate a form in which layers are in direct contact with each other with no other layer therebetween and a form in which layers are provided with one or more other layers therebetween. For example, the primer layer can be provided as described above between the substrate and the photochromic layer, or the substrate and the photochromic layer may be in direct contact with each other. In addition, in one aspect, the photochromic article may have a layer configuration of "substrate/photochromic layer/protective layer/another cured layer." In such a layer configuration, the other cured layer may be a cured layer that is generally called a hard coat layer. When the hard coat layer is provided in addition to the protective layer, it is possible to further improve the durability of the photochromic article. In addition, in one aspect, when the hard coat layer is provided, it is possible to improve the impact resistance of the photochromic article. In one aspect, the other cured layer can be in direct contact with the protective layer with no other layer therebetween.

The thickness of the other cured layer may be, for example, in a range of 1 to 10 µm, and preferably in a range of 1 to 8 µm, and more preferably in a range of 1 to 5 µm. In one aspect, the other cured layer may be thinner than the protective layer. As an example of the other cured layer, an organosilicon-based cured layer may be exemplified. The organosilicon-based cured layer is preferable because it has generally excellent impact resistance. In addition, for example, when an anti-reflective film is additionally provided, the organosilicon-based cured layer is preferable because it has generally excellent adhesion with respect to the anti-reflective film.

The organosilicon-based cured layer is a cured layer obtained by curing a polymerizable composition containing an organosilicon compound. Examples of organosilicon compounds include an organosilicon compound that can produce a silanol group when a polymerization treatment is performed and an organopolysiloxane having a reactive group such as a halogen atom or an amino group that undergoes a condensation reaction with a silanol group. In addition, examples of organosilicon compounds include a silane coupling agent having a polymerizable group such as a vinyl group, an allyl group, a (meth)acryloyl group, and a (meth)acryloyloxy group, and a hydrolyzable group such as an alkoxy group. The polymerizable composition containing an organosilicon compound may contain particles of an inorganic substance such as silicon oxide or titanium oxide in order to adjust the refractive index or the like. For details of the polymerizable composition containing an organosilicon compound, a known technique relating to an organosilicon-based cured layer that can function as a hard coat layer can be applied. Such a polymerizable composition can be cured when a polymerization reaction proceeds due to light emission and/or a heat treatment according to the type of the component contained in the composition.

When a wiping treatment is performed on the surface of the protective layer with a solvent before the other cured layer is provided on the protective layer, it is possible to improve the cleanliness of the surface of the protective layer to which a polymerizable composition for forming the other cured layer is applied. A wiping treatment is preferably performed with a solvent in this manner because it prevents a foreign substance from being interposed between the protective layer and the other cured layer. However, if the protective layer has poor solvent resistance, the protective layer may be damaged due to the wiping treatment with a solvent (for example, the occurrence of surface roughening). The occurrence of such damage causes fogging and optical defects in the photochromic article containing this protective layer. On the other hand, the protective layer formed from the polymerizable composition for forming a protective layer having the composition described above can exhibit excellent solvent resistance.

The wiping treatment with a solvent can be performed by a known method. For example, the wiping treatment with a solvent can be performed by wiping the surface of the protective layer with a cloth soaked with the solvent. Examples of solvents include ketone solvents such as acetone and alcohol solvents such as ethanol and isopropyl alcohol. In one aspect, the protective layer preferably has high resistance with respect to a ketone solvent that is widely used as a solvent for wiping when an optical article is produced.

The photochromic article may further have one or more layers in addition to the various layers described above. Examples of such layers include layers known as functional layers of the optical article such as an anti-reflective layer, a water repellent or hydrophilic antifouling layer, and an anti-fogging layer.

One aspect of the photochromic article is a spectacle lens. In addition, as one aspect of the photochromic article, a goggles lens, a visor (cap) of a sun visor, a shield member of a helmet, and the like may be exemplified. The photochromic article can be suitably applied as an optical article having an anti-glare function.

### [Eyeglasses]

One aspect of the present invention relates to eyeglasses including the photochromic article, which is a spectacle lens. The details of the spectacle lens included in the eyeglasses are as described above. When the eyeglasses include such a spectacle lens, for example, the photochromic compound contained in the photochromic layer develops a color when hit with sunlight outdoors and an anti-glare effect can be exhibited like sunglasses, and when returned to indoors, the photochromic compound can fade to restore transmission. Known techniques can be applied to the configuration of the frame and the like for the eyeglasses.

### [Examples]

Hereinafter, the present invention will be described in more detail with reference to examples. However, the present invention is not limited to the embodiments shown in the examples. Unless otherwise specified, the following processes and evaluations were performed in the air at room temperature (20°C±5°C).

### [Example 1]

### <Production of spectacle lens (photochromic article)>

A plastic lens substrate (product name EYAS commercially available from HOYA; a central wall thickness of 2.5 mm, a radius of 75 mm, S-4.00) was immersed in a 10 mass% sodium hydroxide aqueous solution (a liquid temperature of 60°C) for 5 minutes and then washed with pure water and dried. Then, a primer layer was formed on a convex surface (object-side surface) of the plastic lens substrate. Specifically, an aqueous polyurethane resin solution (polycarbonate polyol polyurethane emulsion; a viscosity of 100 CPS, a solid content concentration of 38 mass%) was applied to the convex surface of the plastic lens substrate in an environment of a temperature of 25°C and a relative humidity of 50% by a spin coating method, and then naturally dried for 15 minutes, and thus a primer layer with a thickness of 5.5 µm was formed.

The polymerizable composition for forming a photochromic layer prepared as follows was applied onto the primer layer by a spin coating method to form a coating layer. Ultraviolet rays (a wavelength of 405 nm) were emitted toward the surface of the coating layer in a nitrogen atmosphere (an oxygen concentration of 500 ppm or less), and the coating layer was cured to form a photochromic layer. The thickness of the formed photochromic layer was 45 µm.

The polymerizable composition for forming a protective layer prepared as follows was applied onto the photochromic layer by a spin coating method to form a coating layer. Ultraviolet rays (a wavelength of 405 nm) were emitted toward the surface of the coating layer in a nitrogen atmosphere (an oxygen concentration of 500 ppm or less), and the coating layer was cured to form a protective layer. The thickness of the formed protective layer was 15 µm.

### <Preparation of polymerizable composition for forming photochromic layer>

In a plastic container, a radical polymerizable composition including 20 parts by mass of trimethylolpropane trimethacrylate, 35 parts by mass of BPE oligomer (2,2-bis(4-methacryloyloxypolyethoxyphenyl)propane), 10 parts by mass of EB6A (polyester oligomer hexaacrylate), 10 parts by mass of polyethylene glycol diacrylate having an average molecular weight of 532, and 10 parts by mass of glycidyl methacrylate was prepared. In a composition obtained by adding 3 parts by mass of the following chromene 1 as a photochromic compound, 5 parts by mass of a light stabilizer LS765 bis(1,2,2,6,6-pentamethyl-4-piperidinyl)sebacate, methyl (1,2,2,6,6-pentamethyl-4-piperidyl)sebacate), 5 parts by mass of a hindered phenolic antioxidant (irGACure 245 commercially available from BASF), and 0.6 parts by mass of CGI-1870 (commercially available from BASF) as a UV polymerization initiator to 100 parts by mass of the radical polymerizable composition, and performing stirring and mixing sufficiently, 6 parts by mass of γ-methacryloyloxypropyltrimethoxysilane (KBM 503 commercially available from Shin-Etsu Chemical Co., Ltd.) was added dropwise thereto with stirring. Then, defoaming was performed with a rotation/revolution type stirring defoaming device for 2 minutes, and thus a polymerizable composition for forming a photochromic layer was obtained.

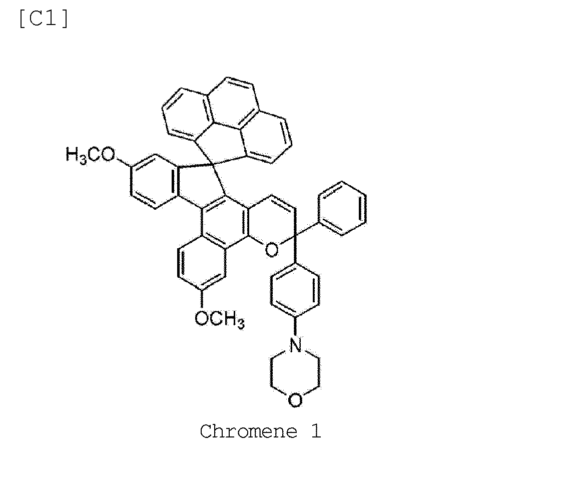

### <Preparation of polymerizable composition for forming protective layer>

In a plastic container, 86.7 parts by mass of tricyclodecanedimethanol diacrylate (alicyclic bifunctional (meth)acrylate), 4.3 parts by mass of pentaerythritol tetraacrylate, 8.7 parts by mass of isobornyl acrylate, and 0.3 parts by mass of bis(2,4,6-trimethylbenzoyl)phenylphosphine oxide (Omnirad 819 commercially available from IGM Resin B.V.) were mixed and sufficiently stirred, and defoaming was then performed with a rotation/revolution type stirring defoaming device. Accordingly, a polymerizable composition for forming a protective layer of Example 1 was prepared.

In the polymerizable composition for forming a protective layer of Example 1, the content of the alicyclic bifunctional (meth)acrylate was 87.0 mass% based on a total amount of the (meth)acrylates.

### [Example 2]

A spectacle lens was produced in the same method as in Example 1 except that a composition for forming a protective layer was prepared by the following method.

### <Preparation of polymerizable composition for forming protective layer>

In a plastic container, 99.0 parts by mass of tricyclodecanedimethanol diacrylate (alicyclic bifunctional (meth)acrylate) and 1.0 part by mass of bis(2,4,6-trimethylbenzoyl)phenylphosphine oxide (Omnirad 819 commercially available from IGM Resin B.V.) were mixed and sufficiently stirred, and defoaming was then performed with a rotation/revolution type stirring defoaming device. Accordingly, a polymerizable composition for forming a protective layer of Example 2 was prepared.

In the polymerizable composition for forming a protective layer of Example 2, since the (meth)acrylate was composed of only an alicyclic bifunctional (meth)acrylate, the content of the alicyclic bifunctional (meth)acrylate was 100 mass% based on a total amount of the (meth)acrylates.

### [Comparative Example 1]

A spectacle lens was produced in the same method as in Example 1 except that a composition for forming a protective layer was prepared by the following method.

### <Preparation of polymerizable composition for forming protective layer>

In a plastic container, 68.0 parts by mass of tricyclodecanedimethanol dimethacrylate (alicyclic bifunctional (meth)acrylate), 20.0 parts by mass of neopentyl glycol dimethacrylate, 12.0 parts by mass of trimethylolpropane trimethacrylate and 0.3 parts by mass of bis(2,4,6-trimethylbenzoyl)phenylphosphine oxide (Omnirad 819 commercially available from IGM Resin B.V.) were mixed and sufficiently stirred, and defoaming was then performed with a rotation/revolution type stirring defoaming device. Accordingly, a polymerizable composition for forming a protective layer of Comparative Example 1 was prepared.

In the polymerizable composition for forming a protective layer of Comparative Example 1, the content of the alicyclic bifunctional (meth)acrylate was 68.0 mass% based on a total amount of the (meth)acrylates.

In each of the examples and the comparative examples, three spectacle lenses were produced, one lens was subjected to hardness evaluation, another lens was subjected to solvent resistance evaluation, and a hard coat layer was formed on the remaining lens by the method to be described below.

### [Evaluation method]

### (1) Evaluation of hardness

For each of the spectacle lenses, an indenter was pushed in by applying a load of 100 mgf to the surface of the protective layer using an ultra-fine indentation hardness tester ENT-2100 (commercially available from Elionix Inc.). The surface area invaded by the indenter in this case was measured from the push depth, and the Martens hardness was determined as "load/surface area invaded by indenter". The Martens hardness is defined as a value obtained by dividing the load F by the surface area invaded by the indenter when a load F is applied and the indenter is pushed to a predetermined pushing amount h. This is a hardness measured when a test load is applied and is obtained from a value of the load-push depth curve when the load increases.

### (2) Evaluation of solvent resistance

The surface of the protective layer of each of the spectacle lenses was wiped with a cloth soaked with acetone. The surface of the protective layer after wiping was visually observed and evaluated according to the following criteria.
Good: No surface roughness
Damaged: surface roughness was observed

The above evaluation results are shown in Table 1.

**[Table 1]**

| | Comparative Example 1 | Example 1 | Example 2 |
|---|---|---|---|
| Martens hardness (kgf/mm²) | 8.6 | 13.1 | 17.2 |
| Solvent resistance | Damaged | Good | Good |

### [Formation of hard coat layer]

17 parts by mass of γ-glycidoxypropyltrimethoxysilane, 30 parts by mass of methanol, and 28 parts by mass of water-dispersed colloidal silica (a solid content of 40 mass%, and an average particle size of 15 nm) were put into a glass container including a magnetic stirrer, and sufficiently mixed, and the mixture was stirred at 5°C for 24 hours. Then, 15 parts by mass of propylene glycol monomethyl ether, 0.05 parts by mass of a silicone surfactant, and 1.5 parts by mass of aluminium acetylacetonate as an curing agent were added thereto and sufficiently stirred, and filtration was then performed to prepare a hard coating solution (polymerizable composition for forming a hard coat layer).

The surface of the protective layer of each spectacle lens produced above was wiped with acetone and then coated with the hard coating solution by a dip coating method (a pulling speed of 20 cm/min). Then, heating and curing were performed in a heat treatment furnace at a temperature of 100°C inside the furnace for 60 minutes, and thus a hard coat layer (organosilicon-based cured layer) with a thickness of 3 µm was formed.

When each spectacle lens on which a hard coat layer was formed in this manner was visually observed, the spectacle lens of Example 1 and the spectacle lens of Example 2 had better transparency than the spectacle lens of Comparative Example 1. This is because, as shown in Table 1, since the protective layers of the spectacle lens of Example 1 and the spectacle lens of Example 2 had better solvent resistance than the protective layer of the spectacle lens of Comparative Example 1, surface roughness was less likely to occur in the wiping treatment with a solvent before the hard coat layer was formed.

### [Example 3]

A spectacle lens including a substrate, a primer layer, a photochromic layer, a protective layer and a hard coat layer in that order was produced in the same manner as in Example 1 except that 0.3 mass% of a UV absorbing agent (hydroxyphenyltriazine-based UV absorbing agent, product name Tinubin 479 (commercially available from BASF)) based on a total amount of 100 mass% of the composition was added to the polymerizable composition for forming a protective layer.

The coloring density of the spectacle lens of Example 1 and the spectacle lens of Example 3 was evaluated by the following method according to JIS T7333: 2005.

Light was emitted to the object-side surface of each spectacle lens through an aerosol mass filter using a xenon lamp for 15 minutes (900 seconds), and the photochromic compound in the photochromic layer was caused to develop a color. The transmittance (measurement wavelength: 550 nm) during color development was measured with a spectrophotometer (commercially available from Otsuka Electronics Co., Ltd.). The light emission was performed so that the tolerances of the irradiance and the irradiance specified in JIS T7333: 2005 were values shown in the following Table 2.

**[Table 2]**

| Wavelength range (nm) | Irradiance (W/m²) | Tolerance of irradiance (W/m²) |
|---|---|---|
| 300 to 340 | <2.5 | - |
| 340 to 380 | 5.6 | ±1.5 |
| 380 to 420 | 12 | ±3.0 |
| 420 to 460 | 12 | ±3.0 |
| 460 to 500 | 26 | ±2.6 |

The smaller value of the transmittance measured above (hereinafter referred to as a "transmittance during color development") indicates a higher density in color development of the photochromic compound.

Then, in a QUV UV fluorescent tube type accelerated weathering tester (commercially available from Q-Lab), ultraviolet rays were emitted toward the object-side surface of the spectacle lens for 1 week under emission conditions of 0.2 W/m².

For the spectacle lens after UV emission, the transmittance during color development was determined in the same manner as above after the sample was temporarily left in the darkroom and the photochromic compound was faded. A smaller increase in the transmittance during color development after UV emission with respect to that before UV emission can be evaluated to have better weather resistance. For the spectacle lens of Example 1, the value of "(transmittance during color development after UV emission)-(transmittance during color development before UV emission)" was 2.8%. On the other hand, when the spectacle lens of Example 3 was evaluated in the same manner, the value of "(transmittance during color development after UV emission)-(transmittance during color development before UV emission)" was 0.3%.

For the spectacle lens of Example 1 and the spectacle lens of Example 3, the YI value specified in JIS K 7373: 2006 was measured using a spectral transmittance measuring device DOT-3 (commercially available from Murakami Color Research Laboratory). The YI value is an index indicating the degree of coloring, and a smaller value indicates a smaller degree of coloring.

Then, in a QUV UV fluorescent tube type accelerated weathering tester (commercially available from Q-Lab), ultraviolet rays were emitted toward the object-side surface of the spectacle lens for 1 week under emission conditions of 0.2 W/m².

For the spectacle lens after UV emission, the YI value was determined in the same manner as above. A smaller increase in the YI value after UV emission with respect to that before UV emission can be evaluated to have better weather resistance. For the spectacle lens of the Example 1, the value of "(YI value after UV emission)-(YI value before UV emission)" was 9.9%. On the other hand, when the spectacle lens of Example 3 was evaluated in the same manner, the value of "(YI value after UV emission)-(YI value before UV emission)" was 4.6%.

Finally, the above aspects will be summarized.

According to one aspect, there is provided a polymerizable composition for forming a protective layer of a photochromic article, including one or more types of (meth)acrylates, and 70.0 mass% or more of an alicyclic bifunctional (meth)acrylate based on a total amount of the (meth)acrylates.

According to the polymerizable composition for forming a protective layer, a protective layer having both high hardness and excellent solvent resistance can be formed on a photochromic article.

In one aspect, the polymerizable composition for forming a protective layer may contain 80.0 mass% or more of the alicyclic bifunctional (meth)acrylate based on a total amount of the (meth)acrylates.

In one aspect, the polymerizable composition for forming a protective layer may contain 90.0 mass% or more of the alicyclic bifunctional (meth)acrylate based on a total amount of the (meth)acrylates.

In one aspect, the polymerizable composition for forming a protective layer may contain 80.0 mass% or more of the (meth)acrylate based on a total amount of the composition.

In one aspect, the polymerizable composition for forming a protective layer may contain 90.0 mass% or more of the (meth)acrylate based on a total amount of the composition.

In one aspect, the polymerizable composition for forming a protective layer may further include a radical polymerization initiator.

In one aspect, the polymerizable composition for forming a protective layer may further include a UV absorbing agent.

According to one aspect, there is provided a photochromic article including a photochromic layer containing a photochromic compound and a protective layer which is a cured layer obtained by curing the polymerizable composition for forming a protective layer.

In one aspect, the thickness of the protective layer may be in a range of 10 to 45 µm.

In one aspect, the photochromic article may further include a substrate.

In one aspect, the photochromic article may include the substrate, the photochromic layer, the protective layer, and an organosilicon-based cured layer in that order.

In one aspect, the photochromic article may be a spectacle lens.

In one aspect, the photochromic article may be a goggles lens.

In one aspect, the photochromic article may be a visor of a sun visor.

In one aspect, the photochromic article may be a shield member of a helmet.

According to one aspect, there are provided eyeglasses including the spectacle lens.

Two or more of the various aspects and forms described in this specification can be combined in arbitrary combinations.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### [Industrial Applicability]

The present invention is beneficial in the technical fields of eyeglasses, goggles, sun visors, helmets and the like.

## Claims

1. A polymerizable composition for forming a protective layer of a photochromic article, comprising one or more types of (meth)acrylates, and 70.0 mass% or more of an alicyclic bifunctional (meth)acrylate based on a total amount of the (meth)acrylates.

2. The polymerizable composition for forming a protective layer of a photochromic article according to claim 1,
wherein the composition contains 80.0 mass% or more of the alicyclic bifunctional (meth)acrylate based on a total amount of the (meth)acrylates.

3. The polymerizable composition for forming a protective layer of a photochromic article according to claim 1 or 2,
wherein the composition contains 90.0 mass% or more of the alicyclic bifunctional (meth)acrylate based on a total amount of the (meth)acrylates.

4. The polymerizable composition for forming a protective layer of a photochromic article according to any one of claims 1 to 3,
wherein the composition contains 80.0 mass% or more of the (meth)acrylate based on a total amount of the composition.

5. The polymerizable composition for forming a protective layer of a photochromic article according to any one of claims 1 to 4,
wherein the composition contains 90.0 mass% or more of the (meth)acrylate based on a total amount of the composition.

6. The polymerizable composition for forming a protective layer of a photochromic article according to any one of claims 1 to 5, further comprising
a radical polymerization initiator.

7. The polymerizable composition for forming a protective layer of a photochromic article according to any one of claims 1 to 6, further comprising
a UV absorbing agent.

8. A photochromic article, comprising:
a photochromic layer containing a photochromic compound; and
a protective layer which is a cured layer obtained by curing the composition according to any one of claims 1 to 7.

9. The photochromic article according to claim 8,
wherein the thickness of the protective layer is in a range of 10 to 45 µm.

10. The photochromic article according to claim 8 or 9, further comprising a substrate.

11. The photochromic article according to claim 10,
wherein the photochromic article includes the substrate, the photochromic layer, the protective layer, and an organosilicon-based cured layer in that order.

12. The photochromic article according to any one of claims 8 to 11, which is a spectacle lens.

13. The photochromic article according to any one of claims 8 to 11, which is a goggles lens.

14. The photochromic article according to any one of claims 8 to 11, which is a visor of a sun visor.

15. The photochromic article according to any one of claims 8 to 11, which is a shield member of a helmet.

16. Eyeglasses including the spectacle lens according to claim 12.
